# EUROPÄISCHE PATENTSCHRIFT

(11) **EP 3 083 232 B1**
(45) Veröffentlichungstag und Bekanntmachung des Hinweises auf die Patenterteilung: **14.08.2019**
(21) Anmeldenummer: 14812518.0
(22) Anmeldetag: 16.12.2014
(51) Int. Cl.: B32B 5/20, B32B 27/40

(54) **VERFAHREN ZUR HERSTELLUNG VON HARTSCHAUMSTOFF-VERBUNDELEMENTEN MIT ISOCYANATREAKTIVEN HAFTVENMITTLERN**
METHOD FOR THE PREPARATION OF HARD FOAM COMPOSITE ELEMENTS WITH ISOCYANATE REACTIVE BONDING AGENTS
PROCÉDÉ DE FABRICATION D'ÉLÉMENTS COMPOSITES EN MOUSSE RIGIDE À L'AIDE D'AGENTS ADHÉSIFS RÉACTIFS AUX ISOCYANATES

(30) Priorität: 19.12.2013 EP 13198526
(43) Veröffentlichungstag der Anmeldung: 26.10.2016
(73) Patentinhaber: BASF SE, 67056 Ludwigshafen am Rhein (DE)
(72) Erfinder: KAMPF, Gunnar, 32369 Rahden (DE)
(86) Internationale Anmeldenummer: PCT/EP2014/077915
(87) Internationale Veröffentlichungsnummer: WO 2015/091451

(56) Entgegenhaltungen:
- EP-A1- 2 295 237

## Beschreibung

Die vorliegende Erfindung betrifft ein Verfahren zur Herstellung eines Verbundelements, mindestens umfassend die Schritte Bereitstellen einer Deckschicht; Auftragen einer Zusammensetzung Z1 enthaltend mindestens eine gegenüber Isocyanaten reaktive Verbindung auf die Deckschicht; und das Auftragen einer Zusammensetzung Z2, die zur Herstellung eines Polyurethan- und/oder Polyisocyanuratschaums geeignet ist, auf die zuvor aufgetragene Schicht, sowie Verbundelemente, erhältlich oder erhalten nach einem derartigen Verfahren.

Bei der kontinuierlichen Fertigung von Metallsandwichelementen auf Basis von Polyurethan-Hartschaumstoffen, d.h. sowohl Polyurethan- als auch Polyisocyanurat-Hartschaumstoffen, ist die Haftfestigkeit von der metallischen Deckschicht zum Schaum wichtig, insbesondere wenn es sich bei dem Schaum um einen Polyisocyanurat-Schaum handelt. Im Markt etabliert sind deswegen Zweikomponenten-Polyurethan-Haftvermittlersysteme wie beispielsweise in EP 1516720 offenbart, aber auch die Verwendung von Einkomponenten-Haftvermittlern auf Basis von modifizierten Isocyanaten mit NCO-Endgruppen und einem Gehalt an freien NCO-Gruppen von 10 bis 29 % ist bekannt und in WO 2010/136126 beschrieben. Beide Verfahren führen zu einer Verbesserung der Haftung der metallischen Deckschicht zum Schaum.

Auch in der EP 2 295 237 A1 wird ein Verfahren zur Herstellung eines Schaumstoff-Verbundelements offenbart, umfassend die Schritte des Bereitstellens einer Deckschicht, des Auftragens einer Haftvermittlerschicht auf die Deckschicht, wobei die Haftvermittlerschicht eine Haftvermittlerdispersion umfasst sowie des Auftragens einer Polyurethan und/oder Polyisocyanurat umfassenden Schaumstoffschicht auf die Haftvermittlerschicht. Dabei wird die Verwendung einer wässrigen Polychloroprendispersion als Haftvermittler in der Herstellung von Schaumstoff-Verbundelementen beschrieben.

Die Nachteile der Verwendung eines Zweikomponenten-Polyurethan-Haftvermittlersystems bei der Herstellung von Metallsandwichelementen auf Basis von Polyurethan-Hartschaumstoffen liegen in der Erzeugung eines relativ hohen Ausschusses zu Beginn und Ende einer Produktionsphase, in der möglicherweise unzureichenden Homogenisierung des Haftvermittlers und damit verbundenen Haftungsverschlechterungen, sowie der Tatsache, dass bei der Anwendung dieser Technologie die Reaktivität des verwendeten Haftvermittlers auf die jeweilige Produktionsanlage angepasst werden muss, um gute Haftwerte zu erhalten.

Die Nachteile der Verwendung eines Einkomponenten-Haftvermittlersystems auf Basis von modifizierten Isocyanaten mit NCO-Endgruppen bei der Herstellung liegen in der für gewöhnlich recht hohen Viskosität der verwendeten Prepolymere und der schlechten Applizierbarkeit. Ferner muss eine geringe Haftvermittlermenge möglichst gleichmäßig über die Deckschichtbreite aufgetragen werden. Die üblicherweise verwendeten Auftragsmethoden führen leicht zur Bildung von Isocyanat-Aerosolen, die gesundheitlich bedenklich sind. Weiterhin kommt es ebenfalls zur Erzeugung eines relativ hohen Ausschusses bei längeren Stillstandszeiten zwischen zwei Produktionsphasen, da das prepolymere Isocyanat mit der Luftfeuchtigkeit abreagiert.

Aufgabe der Erfindung war es somit, einen Haftvermittler zur Verbesserung der Haftung von Polyurethanhartschaumstoffen, insbesondere Polyisocyanurathartschaumstoffen, zu metallischen Deckschichten zu generieren, ohne dabei die oben erwähnten technischen Nachteile der bereits vorhandenen Lösungsansätze in Kauf nehmen zu müssen. Insbesondere sollte der Haftvermittler gesundheitlich unbedenklich sein, sich leicht applizieren lassen und auch nach längeren Stillstandszeiten zwischen zwei Produktionsphasen noch wirksam sein. Ferner war es Aufgabe der Erfindung, ein Verfahren zur Herstellung von Schaumstoffverbundelementen zu entwickeln, bei denen die Haftung zwischen dem Schaumstoffkern, primär dem Polyurethan-Hartschaumstoffkern, und der Deckschicht und im speziellen den Polyisocyanurathartschaumstoff-Kern und der Deckschicht verbessert ist.

Erfindungsgemäß wird diese Aufgabe gelöst durch ein Verfahren zur Herstellung eines Verbundelements, mindestens umfassend die Schritte:
A) Bereitstellen einer Deckschicht;
B) Auftragen einer Zusammensetzung Z1 enthaltend mindestens eine gegenüber Isocyanaten reaktive Verbindung auf die Deckschicht;
C) Auftragen einer Zusammensetzung Z2, die zur Herstellung eines Polyurethan- und/oder Polyisocyanuratschaums geeignet ist, auf die gemäß Schritt B) aufgetragene Schicht,
wobei die Zusammensetzung Z1 weniger als 5 Gewichts-% bezogen auf die Masse der gegenüber Isocyanaten reaktiven Verbindung an Verbindungen enthält, die mit Isocyanat unter Bildung eines Gases reagieren.

Überraschenderweise wurde gefunden, dass die erfindungsgemäße Aufgabe gelöst wird durch die Verwendung einer Zusammensetzung Z1 enthaltend Isocyanat reaktive Verbindung als Haftvermittler, welche vor dem eigentlichen Schaumauftrag appliziert wird.

Das erfindungsgemäße Verfahren umfasst mindestens die Schritte A), B) und C). Erfindungsgemäß kann das Verfahren jedoch auch weitere Schritte umfassen.

Gemäß Schritt A) wird eine Deckschicht bereitgestellt. Dieses kann in kontinuierlichen Produktionsanlagen beispielsweise durch Abwickeln einer aufgerollten Deckschicht von einer Rolle geschehen. Die Art der Deckschicht kann in weiten Bereichen variieren, wobei bevorzugt die im Bereich der Wärmeisolierung üblicherweise eingesetzten Materialien für Deckschichten verwendet werden. Die Dicke der Deckschicht kann beispielsweise 0,01 mm bis 5 mm, bevorzugt 0,05 mm bis 2 mm, besonders bevorzugt 0,1 mm bis 1 mm, spezifischer 0,2 mm bis 0,8 mm und spezifisch 0,3 mm bis 0,7 mm betragen.

Gemäß einer weiteren Ausführungsform betrifft die vorliegende Erfindung demgemäß ein Verfahren zur Herstellung eines Verbundelements wie zuvor beschrieben, wobei die Deckschicht eine Metallfolie ist. Gemäß einer weiteren Ausführungsform betrifft die vorliegende Erfindung ein Verfahren zur Herstellung eines Verbundelements wie zuvor beschrieben, wobei die Deckschicht eine Dicke im Bereich von 0,01 mm bis 5,0 mm aufweist.

Gemäß Schritt B) wird eine Zusammensetzung Z1 enthaltend mindestens eine gegenüber Isocyanaten reaktive Verbindung auf die Deckschicht aufgetragen. Das Auftragen kann dabei mit üblichen Techniken wie beispielweise Aufsprühen oder Rollen erfolgen.

Gemäß einer weiteren Ausführungsform betrifft die vorliegende Erfindung ein Verfahren zur Herstellung eines Verbundelements wie zuvor beschrieben, wobei die Zusammensetzung Z1 mittels Aufsprühen oder Rollen auf die Deckschicht aufgetragen wird.

Die Zusammensetzung Z1 enthält im Rahmen der vorliegenden Erfindung mindestens eine gegenüber Isocyanaten reaktive Verbindung. Erfindungsgemäß kann die Zusammensetzung Z1 auch zwei oder mehr gegenüber Isocyanaten reaktive Verbindungen enthalten. Als gegenüber Isocyanaten reaktive Verbindungen sind im Rahmen der vorliegenden Erfindung grundsätzlich alle Verbindungen geeignet, die funktionelle Gruppen aufweisen, die gegenüber Isocyanaten reaktiv sind. Geeignet sind insbesondere Verbindungen mit OH-funktionellen Gruppen, Verbindungen mit NH-funktionellen Gruppen und Verbindungen mit SH-funktionellen Gruppen. Dabei umfasst der Begriff "Verbindungen mit NH-funktionelle Gruppen" sowohl primäre als auch sekundäre Amine.

Gemäß einer weiteren Ausführungsform betrifft die vorliegende Erfindung demgemäß ein Verfahren zur Herstellung eines Verbundelements wie zuvor beschrieben, wobei die mindestens eine gegenüber Isocyanaten reaktive Verbindung ausgewählt ist aus der Gruppe bestehend aus Verbindungen mit OH-funktionellen Gruppen, Verbindungen mit NH-funktionellen Gruppen und Verbindungen mit SH-funktionellen Gruppen. Dabei können erfindungsgemäß auch Mischungen von zwei oder mehr der genannten Verbindungen eingesetzt werden. Weiter bevorzugt werden gegenüber Isocyanaten reaktive Verbindungen ausgewählt aus der Gruppe bestehend aus Verbindungen mit OH-funktionellen Gruppen und Verbindungen mit NH-funktionellen Gruppen eingesetzt. Besonders bevorzugt sind erfindungsgemäß gegenüber Isocyanaten reaktive Verbindungen ausgewählt aus der Gruppe bestehend aus Verbindungen mit OH-funktionellen Gruppen.

Gemäß einer weiteren Ausführungsform betrifft die vorliegende Erfindung ein Verfahren zur Herstellung eines Verbundelements wie zuvor beschrieben, wobei die mindestens eine gegenüber Isocyanaten reaktive Verbindung ausgewählt ist aus der Gruppe bestehend aus Polyethern, Polyestern, Verbindungen, die Ester- und Ethergruppen tragen, Verbindungen, die Urethan-, Ester- und/oder Ether-Gruppen tragen und Verbindungen, die Urethan-Gruppen tragen.

Erfindungsgemäß bevorzugt sind gegenüber Isocyanaten reaktive Verbindungen, die mit Isocyanaten ohne Freisetzung von Gasen reagieren. Weiter bevorzugt sind im Rahmen der vorliegenden Erfindung gegenüber Isocyanaten reaktive Verbindungen, die weder in sich noch mit Luft oder Luftfeuchtigkeit reagieren.

Bevorzugt handelt es sich bei gegenüber Isocyanaten reaktive Verbindungen um Polyether und/oder Polyester und/oder Verbindungen, welche sowohl Ester- wie auch Ethergruppen aufweisen, und/oder Verbindungen, die Urethan-, Ester- und oder Ether-Funktionen beinhalten, bevorzugt um Polyether und/oder Polyester und/oder Verbindungen, welche sowohl Ester- wie auch Ethergruppen beinhalten, besonders bevorzugt um Polyether und/oder Polyester, spezifisch um Polyether.

Erfindungsgemäß besonders bevorzugt sind als gegenüber Isocyanaten reaktive Verbindungen Polyetherpolyole. Die Polyetherpolyole können nach bekannten Verfahren, beispielsweise durch anionische Polymerisation von einem oder mehreren Alkylenoxiden mit 2 bis 4 Kohlenstoffatomen mit Alkalihydroxiden, wie Natrium- oder Kaliumhydroxid, Alkalialkoholaten, wie Natriummethylat, Natrium- oder Kaliumethylat oder Kaliumisopropylat, oder aminischen Alkoxylierungs-Katalysatoren wie Dimethylethanolamin (DMEOA), Imidazol oder Imidazolderivate unter Verwendung mindestens eines Startermoleküls oder Startermolekülgemisches, das im Mittel 2 bis 8, vorzugsweise 2 bis 6 reaktive Wasserstoffatome gebunden enthält, oder durch kationische Polymerisation mit Lewis-Säuren, wie Antimonpentachlorid, Borfluorid-Etherat oder Bleicherde, hergestellt werden. Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Bevorzugte Alkylenoxide sind Propylenoxid und Ethylenoxid, besonders bevorzugt Propylenoxid.

Als Startermoleküle kommen beispielsweise die im folgenden genannten Verbindungen in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamine, 2,3-, 2,4- und 2,6-Toluylendiamin und 4,4'-, 2,4'- und 2,2'-Diaminodiphenylmethan. Besonders bevorzugt sind die genannten diprimären Amine, beispielsweise Ethylendiamin. Als Startermoleküle kommen ferner in Betracht: Alkanolamine, wie z.B. Ethanolamin, N-Methyl- und N-Ethylethanolamin, Dialkanolamine, wie z.B. Diethanolamin, N-Methyl- und N-Ethyldiethanolamin, und Trialkanolamine, wie z.B. Triethanolamin, und Ammoniak. Vorzugsweise verwendet werden zwei oder mehrwertige Alkohole (auch "Starter" genannt), wie Ethandiol, Propandiol-1,2 und -1,3, Diethylenglykol (DEG), Dipropylenglykol, Butandiol-1,4, Hexandiol-1,6, Glycerin, Trimethylolpropan, Pentaerythrit, Sorbit und Saccharose. Besonders bevorzugt ist die Verwendung eines Starters oder Startergemisches mit einer OH-Funktionalität von kleiner/gleich 6, bevorzugt kleiner/gleich 5, besonders bevorzugt kleiner/gleich 4, spezifischer kleiner/gleich 3 und im speziellen kleiner/gleich 2. Es besteht auch die Möglichkeit Fettsäuren oder Fettsäurederivate, beispielsweise Fettsäureester dem Startergemisch zuzusetzen, so dass ein gewisser Anteil der OH-Funktionen während der Alkoxylierung durch die Fettsäure verestert wird.

Ferner können Polyesterole als gegenüber Isocyanaten reaktive Verbindung in der Zusammensetzung Z1 eingesetzt werden. Geeignete Polyesterpolyole können aus organischen Dicarbonsäuren mit 2 bis 12 Kohlenstoffatomen, vorzugsweise aromatischen, oder Gemischen aus aromatischen und aliphatischen Dicarbonsäuren und mehrwertigen Alkoholen, vorzugsweise Diolen und/oder Polyolen, bzw. Alkoxylaten dieser, besonders bevorzugt Diolen und/oder Triolen, bzw. Alkoxylaten dieser, hergestellt werden.

Als Dicarbonsäuren kommen insbesondere in Betracht: Bernsteinsäure, Glutarsäure, Adipinsäure, Korksäure, Azelainsäure, Sebazinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride, eingesetzt werden. Als aromatische Dicarbonsäuren werden vorzugsweise Phthalsäure, Phthalsäureanhydrid, Terephthalsäure und/oder Isophthalsäure im Gemisch oder alleine verwendet. Als aliphatische Dicarbonsäuren werden vorzugsweise Dicarbonsäuregemische aus Bernstein-, Glutar- und Adipinsäure in Mengenverhältnissen von beispielsweise 20 bis 35: 35 bis 50 : 20 bis 32 Gew.-Teilen, und insbesondere Adipinsäure verwendet. Beispiele für zwei- und mehrwertige Alkohole, insbesondere Diole und/oder Triole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin, Trimethylolpropan und Pentaerythritol, bzw. deren Alkoxylate. Vorzugsweise verwendet werden Ethandiol, Diethylenglykol, Glycerin, bzw. deren Alkoxylate oder Mischungen aus mindestens zwei der genannten Polyole. Eingesetzt werden können ferner Polyesterpolyole aus Lactonen, z.B. epsilon-Caprolacton oder Hydroxycarbonsäuren, z.B. ω-Hydroxycapronsäure.

Zur Herstellung der Polyesterpolyole kommen auch biobasierte Ausgangsstoffe und/oder deren Derivate in Frage, wie z. B. Rizinusöl, Polyhydroxyfettsäuren, Ricinolsäure, Hydroxylmodifizierten Ölen, Weintraubenkernöl, schwarzem Kümmelöl, Kürbiskernöl, Borretschsamenöl, Sojabohnenöl, Weizensamenöl, Rapsöl, Sonnenblumenkernöl, Erdnussöl, Aprikosenkernöl, Pistazienöl, Mandelöl, Olivenöl, Macadamianussöl, Avocadoöl, Sanddornöl, Sesamöl, Hanföl, Haselnussöl, Primelöl, Wildrosenöl, Distelöl, Walnussöl, Fettsäuren, Hydroxyl-modifizierten Fettsäuren und Fettsäureester basierend auf Myristoleinsäure, Palmitoleinsäure, Ölsäure, Vaccensäure, Petroselinsäure, Gadoleinsäure, Erukasäure, Nervonsäure, Linolsäure, α- und γ-Linolensäure, Stearidonsäure, Arachidonsäure, Timnodonsäure, Clupanodonsäure und Cervonsäure.

Sofern Polyesterole als gegenüber Isocyanaten reaktive Verbindung in der Zusammensetzung Z1 eingesetzt werden, so beinhalten diese bevorzugt weniger als 20 Gewichts-%, besonders bevorzugt weniger als 15 Gewichts-%, spezifischer weniger als 10 Gewichts-%, speziell weniger als 5 Gewichts-% und spezifisch 0 Gewichts-% bezogen auf das Gewicht des Polyesterols an Fettsäuren. Ferner können Verbindungen verwendet werden, bei denen Polyester als Starter gemäß dem bereits beschriebenen Verfahren alkoxyliert werden.

Erfindungsgemäß kann die Zusammensetzung Z1 eine oder mehrere gegenüber Isocyanaten reaktive Verbindungen enthalten, insbesondere eine oder mehrere Verbindungen ausgewählt aus der Gruppe von Polyetherolen und Polyesterolen. In diesem Fall ist es bevorzugt, dass der Polyesterol-Gehalt kleiner als 90 Gewichts-%, vorzugsweise kleiner als 50 Gewichts-%, besonders bevorzugt kleiner als 25 Gewichts-%, spezieller kleiner 10 Gewichts-% bezogen auf die Masse der gegenüber Isocyanaten reaktiven Verbindung in der Zusammensetzung Z1. Bevorzugter Weise besteht die gegenüber Isocyanaten reaktiven Verbindung in der Zusammensetzung Z1 ausschließlich aus Alkoxylaten eines Starters oder einer Startermischung. Bevorzugt werden keine Polyesterole als gegenüber Isocyanaten reaktive Verbindung in der Zusammensetzung Z1 verwendet.

Vorzugsweise ist die Molmasse der gegenüber Isocyanaten reaktiven Verbindung(en) in der Zusammensetzung Z1 größer als 50 g/mol, vorzugsweise größer als 150 g/mol, besonders bevorzugt größer als 200 g/mol, spezieller größer als 400 g/mol, noch spezifischer größer als 500 g/mol, noch bevorzugter größer als 700 g/mol und im Speziellen größer als 900 g/mol.

Vorzugsweise ist die OH-Zahl der gegenüber Isocyanaten reaktiven Verbindung kleiner als 1500 mg KOH/g, vorzugsweise kleiner als 1000 mg KOH/g, besonders bevorzugt kleiner als 800 mg KOH/g, spezieller kleiner als 500 mg KOH/g, noch spezifischer kleiner als 300 mg KOH/g, noch bevorzugter kleiner als 200 mg KOH/g und im Speziellen kleiner als 150 mg KOH/g.

Vorzugsweise ist die OH-Funktionalität der gegenüber Isocyanaten reaktiven Verbindung kleiner oder gleich 8, vorzugsweise kleiner oder gleich 6, besonders bevorzugt kleiner oder gleich 5, spezieller kleiner oder gleich 4, noch spezifischer kleiner oder gleich 3 und im Speziellen kleiner oder gleich 2.

Bevorzugter Weise ist die OH-Funktionalität der in der Zusammensetzung Z1 enthaltenen gegenüber Isocyanaten reaktiven Verbindung jedoch größer oder gleich 1, vorzugsweise größer oder gleich 1 ,5.

Vorzugsweise ist das für die Herstellung der in der Zusammensetzung Z1 enthaltenen gegenüber Isocyanaten reaktiven Verbindung verwendete Massen-Verhältnis von Ethylenoxid zu Propoylenoxid kleiner oder gleich 9, vorzugsweise kleiner oder gleich 3, besonders bevorzugt kleiner oder gleich 1, spezieller kleiner oder gleich 0,5, noch spezifischer kleiner oder gleich 0,2 und im Speziellen kleiner oder gleich 0,1. Besonders bevorzugt wird ausschließlich Propylenoxid für die Herstellung der in der Zusammensetzung Z1 enthaltenen gegenüber Isocyanaten reaktiven Verbindung verwendet.

Die Zusammensetzung Z1 kann im Rahmen der vorliegenden Erfindung weitere Verbindungen enthalten, beispielsweise Flammschutzmittel, Treibmittel oder auch Katalysatoren für die Polyurethan- oder Polyisocyanurat-Bildung.

Gemäß einer weiteren Ausführungsform betrifft die vorliegende Erfindung ein Verfahren zur Herstellung eines Verbundelements wie zuvor beschrieben, wobei die Zusammensetzung Z1 eine oder mehrere der folgenden Komponenten enthält:
(i) Flammschutzmittel;
(ii) Treibmittel;
(iii) Katalysatoren für die Polyurethan- oder Polyisocyanurat-Bildung.

Erfindungsgemäß kann die Zusammensetzung Z1 dabei auch beliebige Kombinationen der genannten Komponenten enthalten, beispielsweise nur Komponenten (i) oder (ii) oder (iii) oder Komponenten (i) und (ii) oder Komponenten (i) und (iii) oder Komponente (ii) und Komponente (iii). Die genannten Verbindungen können in der Zusammensetzung Z1 in dem Fachmann grundsätzlich bekannten üblichen Mengen eingesetzt werden. Erfindungsgemäß ist es bevorzugt, dass die Zusammensetzung Z1 neben der mindestens einen gegenüber Isocyanaten reaktiven Verbindung keine weiteren Verbindungen aus der Gruppe (i), (ii) oder (iii) enthält. Weiter bevorzugt enthält die Zusammensetzung Z1 neben der mindestens einen gegenüber Isocyanaten reaktiven Verbindung keine weiteren Verbindungen.

Die Zusammensetzung Z1 kann ein Treibmittel, beispielsweise ein chemisches oder ein physikalisches Treibmittel enthalten. Erfindungsgemäß wird der gegenüber Isocyanaten reaktiven Verbindung weniger als 5 Gewichts-%, bevorzugt weniger als 2 Gewichts-%, besonders bevorzugt weniger als 1 Gewichts-%, spezifischer weniger als 0,5 Gewichts-%, im speziellen weniger als 0,2 Gewichts-% und ganz besonders 0 Gewichts-% bezogen auf die Masse der gegenüber Isocyanaten reaktiven Verbindung an chemischen Treibmitteln, d.h. Verbindungen, die mit Isocyanat unter Bildung eines Gases reagieren, bevorzugt Wasser oder Ameisensäure, besonders bevorzugt Wasser, zugesetzt.

Bevorzugt werden der Zusammensetzung Z1 weniger als 20 Gewichts-%, bevorzugt weniger als 10 Gewichts-%, besonders bevorzugt weniger als 5 Gewichts-%, spezifischer weniger als 1 Gewichts-% und ganz besonders 0 Gewichts-% bezogen auf die Masse der Isocyanat-reaktiven Verbindung an mit Isocyanat unreaktiven, niedrigsiedenden Komponenten, sogenannten physikalischen Treibmitteln, zugesetzt.

Der Zusammensetzung Z1 kann weiterhin Flammschutzmittel in jeglicher Form zugesetzt werden. Als Flammschutzmittel können im Allgemeinen die aus dem Stand der Technik bekannten Flammschutzmittel verwendet werden. Geeignete Flammschutzmittel sind beispielsweise bromierte Ester, bromierte Ether (Ixol) oder bromierte Alkohole wie Dibromneopentylakohol, Tribromneopentylalkohol und PHT-4-Diol, sowie chlorierte Phosphate wie Tris-(2-chlorethyl)phosphat, Tris-(2-chlorpropyl)phosphat (TCPP), Tris(1 ,3-dichlorpropyl)phosphat, Trikresylphosphat, Tris-(2,3-dibrompropyl)phosphat, Tetrakis-(2-chlorethyl)ethylendiphosphat, Dimethylmethanphosphonat, Diethanolaminomethylphosphonsäurediethylester sowie handelsübliche halogenhaltige Flammschutzpolyole. Als weitere Phosphate oder Phosphonate können Diethylethanphosphonat (DEEP), Triethylphosphat (TEP), Dimethylpropylphosphonat (DMPP), Diphenylkresylphosphat (DPK) als flüssige Flammschutzmittel eingesetzt werden. Außer den bereits genannten Flammschutzmitteln können auch anorganische oder organische Flammschutzmittel, wie roter Phosphor, roten Phosphor enthaltende Zurichtungen, Aluminiumoxidhydrat, Antimontrioxid, Arsenoxid, Ammoniumpolyphosphat und Calciumsulfat, Blähgraphit oder Cyanursäurederivate, wie z.B. Melamin, oder Mischungen aus mindestens zwei Flammschutzmitteln, wie z.B. Ammoniumpolyphosphaten und Melamin sowie gegebenenfalls Maisstärke oder Ammoniumpolyphosphat, Melamin, Blähgraphit und gegebenenfalls aromatische Polyester zum Flammfestmachen der Polyurethan-Hartschaumstoffe verwendet werden.

Im Rahmen der vorliegenden Erfindung bevorzugte Flammschutzmittel beinhalten kein Brom. Besonders bevorzugte Flammschutzmittel bestehen aus Atomen ausgewählt aus der Gruppe bestehend aus Kohlenstoff, Wasserstoff, Phosphor, Stickstoff, Sauerstoff und Chlor, spezieller aus der Gruppe bestehend aus Kohlenstoff, Wasserstoff, Phosphor und Chlor. Bevorzugte Flammschutzmittel weisen keine gegenüber Isocyanatgruppen reaktiven Gruppen auf. Vorzugsweise sind die erfindungsgemäß eingesetzten Flammschutzmittel bei Raumtemperatur flüssig. Besonders bevorzugt sind TCPP, DEEP, TEP, DMPP und DPK, insbesondere TCPP.

Der Zusammensetzung Z1 können ferner die üblichen PUR und PIR Katalysatoren zugesetzt werden. Als Katalysatoren der Bildung von Urethan-, bzw. Isocyanuratstrukturen können beispielsweise Carboxylatsalze sowie basische, vorzugsweise aminische Katalysatoren verwendet werden.

Zweckmäßigerweise verwendet werden basische Urethankatalysatoren, beispielsweise tertiäre Amine, wie Triethylamin, Tributylamin, Dimethylbenzylamin, Dicyclohexylmethylamin, Dimethylcyclohexylamin und Alkanolaminverbindungen, wie Triethanolamin, Triisopropanolamin, N,N',N"-Tris-(dialkylaminoalkyl)hexahydrotriazine, z.B. N,N',N"-Tris(dimethylaminopropyl)-s-hexahydrotriazin, und Triethylendiamin. Bevorzugt sind Triethylamin, Dimethylcyclohexylamin und N,N' ,N"-Tris-(dialkylaminoalkyl)hexahydrotriazine, z. B. N, N', N"-Tris-(dimethylaminopropyl)-s-hexahydrotriazin, besonders bevorzugt Dimethylcyclohexylamin.

Als mögliche Katalysatoren mit einer Carboxylatstruktur sind primär Ammonium- oder Alkalimetallcarboxylate, bevorzugt Alkalimetallcarboxylatsalze, besonders bevorzugt, Alkalimetallformiat, Alkalimetalacetat oder Alkalimetalhexanoat zu nennen. Weitere Angaben zu den genannten und weitere Ausgangsstoffe können der Fachliteratur, beispielsweise dem Kunststoffhandbuch, Band VII, Polyurethane, Carl Hanser Verlag München, Wien, 1., 2. und 3. Auflage 1966, 1983 und 1993, entnommen werden.

Weiter können der Zusammensetzung Z1 gegebenenfalls noch weitere Hilfsmittel und/oder Zusatzstoffe zugesetzt werden. Genannt seien beispielsweise oberflächenaktive Substanzen, Füllstoffe, Farbstoffe, Pigmente, Hydrolyseschutzmittel, fungistatische und bakteriostatisch wirkende Substanzen.

Als oberflächenaktive Substanzen kommen z.B. Verbindungen in Betracht, welche zur Unterstützung der Homogenisierung der Ausgangsstoffe dienen. Genannt seien beispielsweise Emulgatoren, wie die Natriumsalze von Ricinusölsulfaten oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure; Schaumstabilisatoren, wie Siloxanoxalkylen-Mischpolymerisate und andere Organopolysiloxane, oxethylierte Alkylphenole, oxethylierte Fettalkohole, Paraffinöle, Ricinusöl- bzw. Ricinolsäureester, Türkischrotöl und Erdnussöl, und Zellregler, wie Paraffine, Fettalkohole und Dimethylpolysiloxane. Zur Verbesserung der Emulgierwirkung eignen sich ferner die oben beschriebenen oligomeren Acrylale mit Polyoxyalkylen- und Fluoralkanresten als Seitengruppen.

Außerdem können der Zusammensetzung Z1 unreaktive Feststoffe, so genannte Füllstoffe, in jeglicher Form zugesetzt werden.

Als Füllstoffe, insbesondere verstärkend wirkende Füllstoffe, sind die an sich bekannten, üblichen organischen und anorganischen Füllstoffe, Verstärkungsmittel, Beschwerungsmittel, Mittel zur Verbesserung des Abriebverhaltens in Anstrichfarben, Beschichtungsmittel usw. zu verstehen. Im Einzelnen seien beispielhaft genannt: anorganische Füllstoffe wie silikatische Mineralien, beispielsweise Schichtsilikate wie Antigorit, Serpentin, Hornblenden, Amphibole, Chrisotil und Talkum, Metalloxide, wie Kaolin, Aluminiumoxide, Titanoxide und Eisenoxide, Metallsalze, wie Kreide, Schwerspat und anorganische Pigmente, wie Cadmiumsulfid und Zinksulfid, sowie Glas u.a .. Vorzugsweise verwendet werden Kaolin (China Clay), Aluminiumsilikat und Copräzipitate aus Bariumsulfat und Aluminiumsilikat sowie natürliche und synthetische faserförmige Mineralien wie Wollastonit, Metall- und insbesondere Glasfasern verschiedener Länge, die gegebenenfalls geschlichtet sein können. Als organische Füllstoffe kommen beispielsweise in Betracht: Kohle, Melamin, Kollophonium, Cyclopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Verbindungen. Besonders bevorzugt sind hierbei Füllstoffe, welche das Brandverhalten positiv beeinflussen, wie beispielsweise Blähgraphit, Gips, Kreide Carbonsäureestern und insbesondere Kohlenstofffasern.

Erfindungsgemäß wird die Zusammensetzung Z1 gemäß Schritt B) in einer Menge von beispielsweise 1 bis 1000 g/m², vorzugsweise 5 bis 800 g/m², weiter bevorzugt 10 bis 800 g/m², vorzugsweise 10 bis 400 g/m², besonders bevorzugt 50 bis 400 g/m² und insbesondere 80 bis 250 g/m² oder 20 bis 250 g/m² und insbesondere 25 bis 150 g/m² aufgetragen.

Gemäß einer weiteren Ausführungsform betrifft die vorliegende Erfindung ein Verfahren zur Herstellung eines Verbundelements wie zuvor beschrieben, wobei ei die Zusammensetzung Z1 gemäß Schritt B) in einer Menge im Bereich von 1 bis 1000 g/m² auf die Deckschicht aufgetragen wird.

Gemäß Schritt C) des erfindungsgemäßen Verfahrens wird eine Zusammensetzung Z2, die zur Herstellung eines Polyurethan- und/oder Polyisocyanuratschaums geeignet ist, auf die gemäß Schritt B) aufgetragene Schicht aufgetragen.

Zusammensetzungen, die zur Herstellung eines Polyurethan- und/oder Polyisocyanuratschaums geeignet sind, sind grundsätzlich bekannt. Geeignete Komponenten sind dem Fachmann bekannt. Geeignete Komponenten der Zusammensetzung sind insbesondere Polyisocyanate und gegenüber Isocyanaten reaktive Verbindungen. Gemäß einer weiteren Ausführungsform betrifft die vorliegende Erfindung demgemäß ein Verfahren zur Herstellung eines Verbundelements wie zuvor beschrieben, wobei die Zusammensetzung Z2 mindestens ein Polyisocyanat und mindestens eine gegenüber Isocyanaten reaktive Verbindung enthält.

Neben dem mindestens ein Polyisocyanat und der mindestens eine gegenüber Isocyanaten reaktive Verbindung kann die Zusammensetzung Z2 weitere Komponenten enthalten.

Erfindungsgemäß enthält die Zusammensetzung Z2 insbesondere die Komponenten a) bis c), gegebenenfalls d) und f):
a) mindestens ein Polyisocyanat;
b) mindestens eine gegenüber Isocyanaten reaktiven Verbindung,
c) ein oder mehrere Treibmittel,
d) gegebenenfalls Flammschutzmittel,
e) gegebenenfalls die PU und/oder PIR-Reaktion katalysierenden Substanzen, sowie
f) gegebenenfalls weiteren Hilfsmitteln oder Zusatzstoffen.

Gemäß einer weiteren Ausführungsform betrifft die vorliegende Erfindung ein Verfahren zur Herstellung eines Verbundelements wie zuvor beschrieben, wobei die Zusammensetzung Z2 die folgenden Komponenten enthält:
a) mindestens ein Polyisocyanat;
b) mindestens eine gegenüber Isocyanaten reaktiven Verbindung,
c) mindestens ein Treibmittel.

Gemäß einer weiteren Ausführungsform betrifft die vorliegende Erfindung ein Verfahren zur Herstellung eines Verbundelements wie zuvor beschrieben, wobei die Zusammensetzung Z2 eine oder mehrere der folgenden Komponenten enthält:
d) Flammschutzmittel,
e) Katalysatoren für die Polyurethan- oder Polyisocyanurat-Bildung
f) weitere Hilfsmittel oder Zusatzstoffe.

Erfindungsgemäß enthält die Zusammensetzung Z2 mindestens eine gegenüber Isocyanaten reaktiven Verbindung als Komponente b). Als gegenüber Isocyanaten reaktive Verbindungen sind grundsätzlich die zuvor im Zusammenhang mit der Zusammensetzung Z1 genannten Verbindungen geeignet.

Dabei umfasst die Komponente b) vorzugsweise Polyether und/oder Polyester. Bevorzugt besteht die Komponente b) zu mehr als 10 Gewichts-%, besonders bevorzugt zu mehr als 30 Gewichts-%, insbesondere zu mehr als 50 Gewichts-%, spezifischer zu mehr als 70 Gewichts-%, noch spezifischer zu mehr als 80 Gewichts-%, noch bevorzugter zu mehr als 90 Gewichts-% und am bevorzugtesten zu 100 Gewichts-% bezogen auf die Masse der Komponente b) aus Polyestern.

Erfindungsgemäß enthält die Zusammensetzung Z2 mindestens ein Polyisocyanat als Komponente a). Unter einem Polyisocyanat wird im Rahmen der vorliegenden Erfindung eine organische Verbindung verstanden, welche mindestens zwei reaktive Isocyanatgruppen pro Molekül enthält, d. h. die Funktionalität beträgt mindestens 2. Sofern die eingesetzten Polyisocyanate oder ein Gemisch mehrerer Polyisocyanate keine einheitliche Funktionalität aufweisen, so beträgt der zahlengewichtete Mittelwert der Funktionalität der eingesetzten Komponente a) mindestens 2.

Als Polyisocyanate a) kommen die an sich bekannten aliphatischen, cycloaliphatischen, araliphatischen und vorzugsweise die aromatischen mehrwertigen Isocyanate in Betracht. Derartige mehrfunktionelle Isocyanate sind an sich bekannt oder können nach an sich bekannten Methoden hergestellt werden. Die mehrfunktionellen Isocyanate können insbesondere auch als Mischungen eingesetzt werden, so dass die Komponente a) in diesem Fall verschiedene mehrfunktionelle Isocyanate enthält. Als Polyisocyanat in Betracht kommende mehrfunktionelle Isocyanate weisen zwei (im folgenden Diisocyanate genannt) oder mehr als zwei Isocyanatgruppen pro Molekül auf.

Im Einzelnen seien insbesondere genannt: Alkylendiisocyanate mit 4 bis 12 Kohlenstoffatomen im Alkylenrest, wie 1,12-Dodecandiioscyanat, 2-Ethyltetramethylendiisocyanat-1,4,2-methylpentamethylendiisocyanat-1,5, Tetramethylendiisocyanat-1,4, und vorzugsweise Hexamethylendiisocyanat-1,6; cycloaliphatische Diisocyanate wie Cyclohexan-1,3- und -1,4-diisocyanat sowie beliebige Gemische dieser Isomeren, 1-Isocyanato-3,3,5-trimethyl-5-isocyanatomethylcyclohexan (IPDI), 2,4- und 2,6-Hexahydrotoluylendiisocyanat sowie die entsprechenden Isomerengemische, 4,4'-, 2,2'- und 2,4'-Dicyclohexylmethandiisocyanat sowie die entsprechenden Isomerengemische, und vorzugsweise aromatische Polyisocyanate, wie 2,4- und 2,6-Toluylendiisocyanat und die entsprechenden Isomerengemische, 4,4'-, 2,4'- und 2,2'-Oiphenylmethandiisocyanat und die entsprechenden Isomerengemische, Mischungen aus 4,4'- und 2,2'-Diphenylmethandiisocyanaten, Polyphenylpolymethylenpolyisocyanate, Mischungen aus 4,4'-, 2,4'- und 2,2'-Diphenylmethandiisocyanaten und Polyphenylpolymethylenpolyisocyanaten (Roh- MDI) und Mischungen aus Roh- MDI und Toluylendiisocyanaten. Insbesondere geeignet sind 2,2'-, 2,4'- und/oder 4,4'-Diphenylmethandiisocyanat (MDI), 1,5- Naphthylendiisocyanat (NDI), 2,4- und/oder 2,6-Toluylendiisocyanat (TDI), 3,3'-0imethyldiphenyldiisocyanat, 1,2-Diphenylethandiisocyanat und/oder p-Phenylen-diisocyanat (PPDI), Tri-, Tetra-, Penta-, Hexa-, Hepta- und/oder Octamethylendiisocyanat, 2- Methylpentamethylen-1,5-diisocyanat, 2-Ethylbutylen-1,4-diisocyanat, Pentamethylen-1,5-diisocyanat, Butylen-1 ,4-diisocyanat, 1-Isocyanato-3,3,5-trimethyl-5-iso-cyanatomethylcyclohexan (Isophoron-diisocyanat, IPDI), 1,4- und/oder 1,3- Bis(isocyanatomethyl)cyclohexan (HXDI), 1,4-Cyclohexandiisocyanat, 1-Methyl-2,4- und/oder -2,6-cyclohexandiisocyanat und 4,4'-, 2,4'- und/oder 2,2'-Dicyclohexylmethandiisocyanat. Häufig werden auch modifizierte Polyisocyanate, d.h. Produkte, die durch chemische Umsetzung organischer Polyisocyanate erhalten werden und die mindestens zwei reaktive Isocyanatgruppen pro Molekül aufweisen, verwendet. Insbesondere genannt seien Ester-, Harnstoff-, Biuret-, Allophanat-, Carbodiimid-, Isocyanurat-, Uretdion-, Carbamat- und/oder Urethangruppen enthaltende Polyisocyanate.

Besonders bevorzugt sind als Polyisocyanate der Komponente a) folgende Ausführungsformen: i) Mehrfunktionelle Isocyanate auf Basis von Toluylendiisocyanat (TDI), insbesondere 2,4-TDI oder 2,6-TDI oder Mischungen aus 2,4- und 2,6-TDI; ii) Mehrfunktionelle Isocyanate auf Basis von Diphenylmethandiisocyanat (MDI), insbesondere 2,2'-MDI oder 2,4'-MDI oder 4,4'-MDI oder oligomeres MDI, das auch als Polyphenylpolymethylenisocyanat bezeichnet wird, oder Mischungen aus zwei oder drei der vor-genannten Diphenylmethandiisocyanate, oder Roh- MDI, welches bei der Herstellung von MDI anfällt, oder Mischungen aus mindestens einem Oligomer des MDI und mindestens einem der vorgenannten niedermolekularen MDI-Derivate; iii) Gemische aus mindestens einem aromatischen Isocyanat gemäß Ausführungsform i) und mindestens einem aromatischen Isocyanat gemäß Ausführungsform ii). Als Polyisocyanat ganz besonders bevorzugt ist polymeres Diphenylmethandiisocyanat. Bei polymerem Diphenylmethandiisocyanat (im Folgenden polymeres MDI genannt) handelt es sich um ein Gemisch aus zweikernigem MDI und oligomeren Kondensationsprodukten und somit Derivaten von Diphenylmethandiisocyanat (MDI). Die Polyisocyanate können bevorzugt auch aus Mischungen von monomeren aromatischen Diisocyanaten und polymerem MDI aufgebaut sein.

Polymeres MDI enthält neben zweikernigem MDI ein oder mehrere mehrkernige Kondensationsprodukte des MDI mit einer Funktionalität von mehr als 2, insbesondere 3 oder 4 oder 5. Polymeres MDI ist bekannt und wird häufig als Polyphenylpolymethylenisocyanat oder auch als oligomeres MDI bezeichnet. Polymeres MDI ist üblicherweise aus einer Mischung aus MDI-basierten Isocyanaten mit unterschiedlicher Funktionalität aufgebaut. Üblicherweise wird polymeres MDI im Gemisch mit monomerem MDI eingesetzt.

Die (mittlere) Funktionalität eines Polyisocyanates, welches polymeres MDI enthält, kann im Bereich von ungefähr 2,2 bis ungefähr 5 variieren, insbesondere von 2,3 bis 4, insbesondere von 2,4 bis 3,5. Eine solche Mischung von MDI-basierten mehrfunktionellen Isocyanaten mit unterschiedlichen Funktionalitäten ist insbesondere das Roh-MDI, das bei der Herstellung von MDI als Zwischenprodukt erhalten wird.

Mehrfunktionelle Isocyanate oder Mischungen mehrerer mehrfunktioneller Isocyanate auf Basis von MDI sind bekannt und werden beispielsweise von BASF Polyurethanes GmbH unter dem Namen Lupranat® vertrieben.

Vorzugsweise beträgt die Funktionalität der Komponente a) mindestens 2, insbesondere mindestens 2,2 und besonders bevorzugt mindestens 2,4. Die Funktionalität der Komponente a) beträgt bevorzugt von 2,2 bis 4 und besonders bevorzugt von 2,4 bis 3. Vorzugsweise beträgt der Gehalt an Isocyanatgruppen der Komponente a) von 5 bis 10 mmol/g, insbesondere von 6 bis 9 mmol/g, besonders bevorzugt von 7 bis 8,5 mmol/g. Dem Fachmann ist bekannt, dass der Gehalt an Isocyanatgruppen in mmol/g und das sogenannte Äquivalenzgewicht in g/Äquivalent in einem reziproken Verhältnis stehen. Der Gehalt an Isocyanatgruppen in mmol/g ergibt sich aus dem Gehalt in Gew.-% nach ASTM D-5155-96 A.

In einer besonders bevorzugten Ausführungsform besteht die Komponente a) aus mindestens einem mehrfunktionellen Isocyanat ausgewählt aus Diphenylmethan-4,4'-diisocyanat, Diphenylmethan-2,4'-diisocyanat, Diphenylmethan-2,2'-diisocyanat und oligomerem Diphenylmethandiisocyanat. Im Rahmen dieser bevorzugten Ausführungsform enthält die Komponente a) besonders bevorzugt oligomeres Diphenylmethandiisocyanat und weist eine Funktionalität von mindestens 2,4 auf.

Die Viskosität der eingesetzten Komponente a) kann in einem weiten Bereich variieren. Vorzugsweise weist die Komponente a) eine Viskosität von 100 bis 3000 mPa*s, besonders bevorzugt von 100 bis 1000 mPa*s, insbesondere bevorzugt von 100 bis 600 mPa*s, spezieller von 200 bis 600 mPa*s und im speziellen von 400 bis 600 mPa*s bei 25 °C, auf.

Weitere geeignete Komponenten c) bis f), die in der Zusammensetzung Z2 enthalten sein können, sind dem Fachmann grundsätzlich bekannt. Insbesondere sind erfindungsgemäß bevorzugte Komponenten c) bis f) im Zusammenhang mit der Zusammensetzung Z1 genannt.

Erfindungsgemäß enthält die Zusammensetzung Z2 bevorzugt die Komponenten a), b) und c), gegebenenfalls d), e) und f). Dabei werden erfindungsgemäß vorzugsweise die Polyisocyanate a) mit den gegenüber Isocyanaten reaktiven Verbindungen b), den Treibmitteln c) und den gegebenenfalls weiteren Komponenten d) bis f) in solchen Mengen vermischt, dass das Äquivalenzverhältnis von NCO-Gruppen der Polyisocyanate a) zur Summe der gegenüber Isocyanaten reaktiven Wasserstoffatome der Komponenten b) bis f) größer als 1:1, vorzugsweise größer als 1,2:1, besonders bevorzugt größer als 1,5:1, spezifischer größer als 1,8:1, noch spezieller größer als 2:1, spezifischer größer als 2,5:1 und insbesondere größer als 3:1 ist.

Weiter bevorzugt ist das Äquivalenzverhältnis von NCO-Gruppen der Polyisocyanate a) zur Summe der gegenüber Isocyanaten reaktiven Wasserstoffatome der Komponenten b) bis f) kleiner als 10:1, vorzugsweise kleiner als 8:1, spezifischer kleiner als 6:1, noch spezieller kleiner als 5:1, spezifischer kleiner als 4,5:1, im Speziellen kleiner als 4:1 und insbesondere kleiner als 3,5:1.

Auch das Auftragen der Zusammensetzung Z2 gemäß Schritt C) kann in einer kontinuierlichen Produktionsanlage geschehen. Diese Schicht kann zum Beispiel eine Dicke von 0,5 cm bis 30 cm, vorzugsweise 2 cm bis 22 cm und besonders bevorzugt 12 cm bis 20 cm aufweisen.

Gemäß einer weiteren Ausführungsform betrifft die vorliegende Erfindung ein Verfahren zur Herstellung eines Verbundelements wie zuvor beschrieben, wobei die gemäß Schritt C) aufgetragene Schicht eine Dicke im Bereich von 0,5 bis 30 cm aufweist.

Verfahren zum Auftragen einer Zusammensetzung, die zur Herstellung eines Polyurethan- und/oder Polyisocyanuratschaums geeignet ist, sind dem Fachmann grundsätzlich bekannt.

Vorteilhaft ist es, wenn die Reaktionskomponenten für die Schaumbildung erst unmittelbar vor dem Auftragen in einem Mischkopf vermischt werden und die Zusammensetzung Z2 unmittelbar danach auf die aus der Zusammensetzung Z1 gebildete Schicht aufgetragen wird, so dass die Schaumbildung auf der mit der Zusammensetzung Z1 versehenen Deckschicht erfolgt. Besonders bevorzugt ist hierbei die Nutzung des sogenannten Doppelbandverfahrens zur Herstellung der Verbundelemente. Insbesondere der Einsatz von Polyisocyanurat oder Polyisocyanurat-Strukturen beinhaltenden Polyurethanhartschaumstoffen ist dabei vorteilhaft, da diese auch mit einem reduzierten Flammschutzmittelgehalt gute Flammschutzeigenschaften besitzen.

Auf die gemäß Schritt C) aufgetragene Schicht kann eine weitere Schicht aufgebracht werden, insbesondere eine Deckschicht. Da üblicherweise die Haftung zur im Verfahren verwendeten oberen Deckschicht, welche optional gemäß Schritt D) aufgebracht wird, auch ohne die Verwendung eines Haftvermittlers ausreichend gut ist, ist es im Rahmen der vorliegenden Erfindung bevorzugt, dass kein Haftvermittler zwischen der gemäß Schritt C) aufgebrachten Schicht und der gemäß Schritt D) aufgebrachten Deckschicht eingesetzt wird.

Gemäß einer weiteren Ausführungsform betrifft die vorliegende Erfindung ein Verfahren zur Herstellung eines Verbundelements wie zuvor beschrieben, wobei das Verfahren einen Schritt D) umfasst:
D) Aufbringen einer Deckschicht auf die gemäß Schritt C) aufgetragene Schicht.

Erfindungsgemäß ist es möglich, dass die weitere Deckschicht vor dem vollständigen Aushärten der gemäß Schritt C) aufgetragenen Schicht aufgebracht wird. Es ist erfindungsgemäß jedoch auch möglich, dass die weitere Deckschicht nach dem vollständigen Aushärten der gemäß Schritt C) aufgetragenen Schicht aufgebracht wird, beispielsweise unter Verwendung einer Haftschicht.

Die weitere Deckschicht kann gleich oder verschieden zu der ersten Deckschicht sein. Bevorzugt handelt es sich ebenfalls um eine Metallfolie, wobei auch die Dicke in den üblichen Bereichen liegt, beispielsweise 0,01 mm bis 5 mm, bevorzugt 0,05 mm bis 2 mm, besonders bevorzugt 0,1 mm bis 1 mm, spezifischer 0,2 mm bis 0,8 mm und spezifisch 0,3 mm bis 0,7 mm. Gemäß einer weiteren Ausführungsform betrifft die vorliegende Erfindung ein Verfahren zur Herstellung eines Verbundelements wie zuvor beschrieben, wobei die zweite Deckschicht eine Metallfolie ist und wobei die Deckschicht vorzugsweise eine Dicke im Bereich von 0,01 mm bis 5,0 mm aufweist.

Gemäß einem weiteren Aspekt betrifft die vorliegende Erfindung auch Verbundelemente, erhältlich oder erhalten nach einem Verfahren zur Herstellung eines Verbundelements wie zuvor beschrieben. Die erfindungsgemäßen Verbundelemente weisen eine hohe Stabilität durch die gute Haftung zwischen Deckschicht und Schaumschicht auf.

Die Zusammensetzung Z1 wirkt als Haftvermittler zwischen der Deckschicht des Verbundelements und der Polyurethan- und/oder Polyisocyanuratschaumschicht. Daher betrifft die vorliegende Erfindung auch die Verwendung einer Zusammensetzung Z1 enthaltend mindestens eine gegenüber Isocyanaten reaktive Verbindung wie zuvor beschrieben als Haftvermittler in einem Verfahren zur Herstellung eines Verbundelements umfassend mindestens eine Deckschicht und mindestens eine Polyurethan- und/oder Polyisocyanuratschaumschicht.

Weitere Ausführungsformen der vorliegenden Erfindung sind den Ansprüchen und den Beispielen zu entnehmen. Es versteht sich, dass die vorstehend genannten und die nachstehend erläuterten Merkmale des erfindungsgemäßen Gegenstandes/Verfahren/Verwendungen nicht nur in der jeweils angegebenen Kombination, sondern auch in anderen Kombinationen verwendbar sind, ohne den Rahmen der Erfindung zu verlassen. So ist z. B. auch die Kombination von einem bevorzugten Merkmal mit einem besonders bevorzugten Merkmal, oder eines nicht weiter charakterisierten Merkmals mit einem besonders bevorzugten Merkmal etc. implizit umfasst auch wenn diese Kombination nicht ausdrücklich erwähnt wird.

Im Folgenden sind beispielhafte Ausführungsformen der vorliegenden Erfindung aufgeführt, wobei diese die vorliegende Erfindung nicht einschränken. Insbesondere umfasst die vorliegende Erfindung auch solche Ausführungsformen, die sich aus den im Folgenden angegebenen Rückbezügen und damit Kombinationen ergeben.
1. Verfahren zur Herstellung eines Verbundelements, mindestens umfassend die Schritte:
   A) Bereitstellen einer Deckschicht;
   B) Auftragen einer Zusammensetzung Z1 enthaltend mindestens eine gegenüber Isocyanaten reaktive Verbindung auf die Deckschicht;
   C) Auftragen einer Zusammensetzung Z2, die zur Herstellung eines Polyurethan- und/oder Polyisocyanuratschaums geeignet ist, auf die gemäß Schritt B) aufgetragene Schicht,
      wobei die Zusammensetzung Z1 weniger als 5 Gewichts-% bezogen auf die Masse der gegenüber Isocyanaten reaktiven Verbindung an Verbindungen enthält, die mit Isocyanat unter Bildung eines Gases reagieren.
2. Verfahren gemäß Ausführungsform 1, wobei die mindestens eine gegenüber Isocyanaten reaktive Verbindung ausgewählt ist aus der Gruppe bestehend aus Verbindungen mit OH-funktionellen Gruppen, Verbindungen mit NH-funktionellen Gruppen und Verbindungen mit SH-funktionellen Gruppen.
3. Verfahren gemäß einer der Ausführungsformen 1 oder 2, wobei die mindestens eine gegenüber Isocyanaten reaktive Verbindung ausgewählt ist aus der Gruppe bestehend aus Polyethern, Polyestern, Verbindungen, die Ester- und Ethergruppen tragen, Verbindungen, die Urethan-, Ester- und/oder Ether-Gruppen tragen und Verbindungen, die Urethan-Gruppen tragen.
4. Verfahren gemäß einer der Ausführungsformen 1 bis 3, wobei die Zusammensetzung Z1 gemäß Schritt B) in einer Menge im Bereich von 1 bis 1000 g/m² auf die Deckschicht aufgetragen wird.
5. Verfahren gemäß einer der Ausführungsformen 1 bis 4, wobei die Zusammensetzung Z1 eine oder mehrere der folgenden Komponenten enthält:
   (i) Flammschutzmittel;
   (ii) Treibmittel;
   (iii) Katalysatoren für die Polyurethan- oder Polyisocyanurat-Bildung.
6. Verfahren gemäß einer der Ausführungsformen 1 bis 5, wobei die Zusammensetzung Z2 mindestens ein Polyisocyanat und mindestens eine gegenüber Isocyanaten reaktive Verbindung enthält.
7. Verfahren gemäß einer der Ausführungsformen 1 bis 6, wobei die Zusammensetzung Z2 die folgenden Komponenten enthält:
   a) mindestens ein Polyisocyanat;
   b) mindestens eine gegenüber Isocyanaten reaktiven Verbindung;
   c) mindestens ein Treibmittel.
8. Verfahren gemäß einer der Ausführungsformen 1 bis 7, wobei die Zusammensetzung Z2 eine oder mehrere der folgenden Komponenten enthält:
   d) Flammschutzmittel,
   e) Katalysatoren für die Polyurethan- oder Polyisocyanurat-Bildung,
   f) weitere Hilfsmittel oder Zusatzstoffe.
9. Verfahren gemäß einer der Ausführungsformen 1 bis 8, wobei die Zusammensetzung Z1 mittels Aufsprühen oder Rollen auf die Deckschicht aufgetragen wird.
10. Verfahren gemäß einer der Ausführungsformen 1 bis 9, wobei die gemäß Schritt C) aufgetragene Schicht eine Dicke im Bereich von 0,5 bis 30 cm aufweist.
11. Verfahren gemäß einer der Ausführungsformen 1 bis 10, wobei das Verfahren einen Schritt D) umfasst:
   D) Aufbringen einer Deckschicht auf die gemäß Schritt C) aufgetragene Schicht.
12. Verfahren gemäß einer der Ausführungsformen 1 bis 11, wobei die Deckschicht eine Metallfolie ist.
13. Verfahren gemäß einer der Ausführungsformen 1 bis 12, wobei die Deckschicht eine Dicke im Bereich von 0,01 mm bis 5,0 mm aufweist.
14. Verbundelement, erhältlich oder erhalten nach einem Verfahren gemäß einer der Ausführungsformen 1 bis 13.
15. Verwendung einer Zusammensetzung Z1 enthaltend mindestens eine gegenüber Isocyanaten reaktive Verbindung als Haftvermittler in einem Verfahren zur Herstellung eines Verbundelements umfassend mindestens eine Deckschicht und mindestens eine Polyurethan- und/oder Polyisocyanuratschaumschicht,
   wobei das Verfahren die Schritte A) bis C) umfasst:
   A) Bereitstellen einer Deckschicht;
   B) Auftragen einer Zusammensetzung Z1 enthaltend mindestens eine gegenüber Isocyanaten reaktive Verbindung auf die Deckschicht;
   C) Auftragen einer Zusammensetzung Z2, die zur Herstellung eines Polyurethan- und/oder Polyisocyanuratschaums geeignet ist, auf die gemäß Schritt B) aufgetragene Schicht,
wobei die Zusammensetzung Z1 weniger als 5 Gewichts-% bezogen auf die Masse der gegenüber Isocyanaten reaktiven Verbindung an Verbindungen enthält, die mit Isocyanat unter Bildung eines Gases reagieren.

Die Erfindung soll an den nachfolgenden Beispielen näher erläutert werden.

### BEISPIELE

Die Isocyanate sowie die mit Isocyanat reaktiven Komponenten wurden zusammen mit den Treibmitteln, Katalysatoren und allen weiteren Zusatzstoffen bei einem bei einem konstanten Mischungsverhältnis von Polyolkomponente zu Isocyanat von 100 : 180 verschäumt.

Bei allen Versuchen ist folgende Polyolkomponente verwendet worden:

| | |
|---|---|
| 61,4 Gewichtsteile | Polyesterol bestehend aus dem Veresterungsprodukt von Phthalsäureanhydrid, Diethylenglykol und Ölsäure mit einer Hydroxylfunktionalität von 1,8 und einer Hydroxylzahl von 235 mg KOH/g. |
| 10 Gewichtsteile | Polyetherol aus ethoxyliertem Ethylenglykol mit einer Hydroxyfunktionalität von 2 und einer Hydroxyzahl von 190 mg KOH/g |
| 25 Gewichtsteile | Flammschutzmittel Trischlorisopropylphosphat (TCPP) |
| 2,0 Gewichtsteile | Stabilisator Tegostab® B8467 (siliconhaltiger Stabilisator der Fa Evonik) |
| 1,6 Gewichtsteile | Ameisensäure-Lösung (85 Gew.-% in Wasser) |

**Zusatzstoffe:**

| | |
|---|---|
| 11,5 Gewichtsteile | Pentan S 80:20 (bestehend aus 80 Gew.-% n-Pentan und 20 Gew.-% Iso-Pentan), der Pentan-Gehalt wurde zum Einstellen der Rohdichte variiert. |
| 1,4 Gewichtsteile weiterhin | Kaliumformiat-Lösung (36 Gew.-% in Monoethylenglykol) Bis(2-dimethylaminoethyl)ether-Lösung (70 Gew.-% in Dipropylenglykol) zum Einstellen der Abbindezeiten. |

**Isocyanatkomponente:**

| | |
|---|---|
| 180 Gewichtsteile | Lupranat® M50 (polymeres Methylendiphenyldiisocyanat (PMDI), mit einer Viskosität von ca. 500 mPa*s bei 25 °C von BASF SE) |

Es wurden 50 mm dicke Sandwichelemente mit 0,05 mm dicker Aluminiumfolie als Deckschichten nach dem Doppelbandverfahren hergestellt. Dabei wurde durch Variation des Gehalts an Pentan-S eine Gesamtrohdichte des Schaumstoffs im Element von 39,5 +/- 1 g/L eingestellt. Die Abbindezeit wurde ferner auf 25 +/- 1 s durch Variation des Anteils der Bis(2-dimethylaminoethyl)ether-Lösung (70 Gew.-% in Dipropylenglykol) eingestellt. Weiterhin wurde die Kontaktzeit, zu der der Schaum die obere Deckschicht berührt, auf 20 +/- 1 s eingestellt.

Nun wurden auf die untere Deckschicht, auf welche das PUR-Reaktionsgemisch aufgetragen wurde, jeweils 2 ebene Stahlblechstücke mit den Massen 1m×1m aufgelegt, die wie folgt behandelt waren:

| Vergleichsbeispiel | keine Vorbehandlung |
|---|---|
| Beispiel 1: | Auftrag eines Polyetherols aus propoxyliertem Propylenglykol mit einer Hydroxyfunktionalität von 2 und einer Hydroxyzahl von 105 mg KOH/g, wobei 100 +/- 10 g des Polypropylenglykol-Ethers auf einen Quadratmeter des Stahlblechstücks mit einem Pinsel gleichmäßig verteilt wurden. (erfindungsgemäß) |

Die Proben wurden nach der Herstellung für 24 Stunden bei Raumtemperatur (18 bis 22 °C) gelagert. Anschließend wurde eines der Blechstücke manuell vom Schaum gezogen und dabei die Schälhaftung qualitativ beurteilt. Die zweite Probe, d.h. das zweite beschäumte Stahlblechstück, wurde zur Bestimmung der Zugfestigkeit gemäß DIN 53292 / DIN EN ISO 527-1 herangezogen. Wichtig zur Beurteilung der so ermittelten Elementzugfestigkeiten, ist die Berücksichtigung der Bruchzone. Sollte bei der Bestimmung der Zugfestigkeit der Schaumstoff von der Deckschicht gelöst werden, d.h. die Bruchzone in der Grenzfläche zwischen der Deckschicht und dem Schaumstoff liegen, so entspricht die Zugfestigkeit der Haftfestigkeit zwischen Schaumstoff und Deckschicht und somit der Haftung des Schaums zur Deckschicht. Sollte hingegen bei der Bestimmung der Zugfestigkeit der Probenkörper im Bereich des Schaumstoffkerns reißen, so wird damit die Zugfestigkeit des Schaumstoffkerns bestimmt, die eigentliche Haftfestigkeit des Schaumstoffs zur Deckschicht liegt oberhalb dieses Wertes. Die Werte sind in Tabelle 1 zusammengestellt.

**Tabelle 1: Vergleich der Schälhaftungen und Zugfestigkeiten nach DIN 53292 / DIN EN ISO 527-1 des Vergleichsbeispiels und des erfindungsgemäßen Beispiels.**

| | Vergleichsbeispiel | Erfindungsgemäßes Beispiel 1 |
|---|---|---|
| Qualitative Beurteilung der Schälhaftung | schlecht | sehr gut |
| Zugfestigkeit nach DIN 53292 / DIN EN ISO 527-1 [N/mm²] | 0,09 | 0,13 |
| Bruchzone | Grenzfläche Deckschicht-Schaumstoff | im Schaumstoff |

Man erkennt deutlich, dass sowohl die Zugfestigkeit wie auch die Schälhaftung des erfindungsgemäßen Beispiels im Vergleich zum Vergleichsbeispiel deutlich verbessert ist. Ferner liegt die Bruchzone bei der Bestimmung der Zugfestigkeit gemäß DIN 53292 / DIN EN ISO 527-1 beim erfindungsgemäßen Beispiel 1 im Schaumstoff, während das Vergleichsbeispiel an der Grenzfläche zwischen Deckschicht und Schaumstoff versagt, so dass die niedrige Zugfestigkeit des Vergleichsbeispiels der Haftfestigkeit zwischen Schaumstoff und Deckschicht entspricht, während die Haftfestigkeit des erfindungsgemäßen Beispiels sogar noch höher liegt als die ermittelte Zugfestigkeit suggeriert.

## Patentansprüche

1. Verfahren zur Herstellung eines Verbundelements, mindestens umfassend die Schritte:
A) Bereitstellen einer Deckschicht;
B) Auftragen einer Zusammensetzung Z1 enthaltend mindestens eine gegenüber Isocyanaten reaktive Verbindung auf die Deckschicht;
C) Auftragen einer Zusammensetzung Z2, die zur Herstellung eines Polyurethan- und/oder Polyisocyanuratschaums geeignet ist, auf die gemäß Schritt B) aufgetragene Schicht,
wobei die Zusammensetzung Z1 weniger als 5 Gewichts-% bezogen auf die Masse der gegenüber Isocyanaten reaktiven Verbindung an Verbindungen enthält, die mit Isocyanat unter Bildung eines Gases reagieren.

2. Verfahren gemäß Anspruch 1, wobei die Zusammensetzung Z1 weniger als 0,2 Gewichts-% bezogen auf die Masse der gegenüber Isocyanaten reaktiven Verbindung an Verbindungen enthält, die mit Isocyanat unter Bildung eines Gases reagieren.

3. Verfahren gemäß Anspruch 1 oder 2, wobei der Zusammensetzung Z1 weniger als 5 Gewichts-%, bezogen auf die Masse der Isocyanat-reaktiven Verbindung an mit Isocyanat unreaktiven, niedrigsiedenden Komponenten, zugesetzt werden.

4. Verfahren gemäß einem der Ansprüche 1 bis 3, wobei die mindestens eine gegenüber Isocyanaten reaktive Verbindung ausgewählt ist aus der Gruppe bestehend aus Verbindungen mit OH-funktionellen Gruppen, Verbindungen mit NH-funktionellen Gruppen und Verbindungen mit SH-funktionellen Gruppen.

5. Verfahren gemäß einem der Ansprüche 1 bis 4, wobei die mindestens eine gegenüber Isocyanaten reaktive Verbindung ausgewählt ist aus der Gruppe bestehend aus Polyethern, Polyestern, Verbindungen, die Ester- und Ethergruppen tragen, Verbindungen, die Urethan-, Ester- und/oder Ether-Gruppen tragen und Verbindungen, die Urethan-Gruppen tragen.

6. Verfahren gemäß einem der Ansprüche 1 bis 5, wobei die OH-Funktionalität der gegenüber Isocyanaten reaktiven Verbindung kleiner oder gleich 3 und größer oder gleich 1 ist.

7. Verfahren gemäß einem der Ansprüche 1 bis 6, wobei die Zusammensetzung Z1 gemäß Schritt B) in einer Menge im Bereich von 1 bis 1000 g/m² auf die Deckschicht aufgetragen wird.

8. Verfahren gemäß einem der Ansprüche 1 bis 7, wobei die Zusammensetzung Z1 eine oder mehrere der folgenden Komponenten enthält:
(i) Flammschutzmittel;
(ii) Treibmittel;
(iii) Katalysatoren für die Polyurethan- oder Polyisocyanurat-Bildung.

9. Verfahren gemäß einem der Ansprüche 1 bis 8, wobei die Zusammensetzung Z2 mindestens ein Polyisocyanat und mindestens eine gegenüber Isocyanaten reaktive Verbindung enthält.

10. Verfahren gemäß einem der Ansprüche 1 bis 9, wobei die Zusammensetzung Z2 die folgenden Komponenten enthält:
a) mindestens ein Polyisocyanat;
b) mindestens eine gegenüber Isocyanaten reaktiven Verbindung,;
c) mindestens ein Treibmittel.

11. Verfahren gemäß einem der Ansprüche 1 bis 10, wobei die Zusammensetzung Z2 eine oder mehrere der folgenden Komponenten enthält:
d) Flammschutzmittel,
e) Katalysatoren für die Polyurethan- oder Polyisocyanurat-Bildung,
f) weitere Hilfsmittel oder Zusatzstoffe.

12. Verfahren gemäß einem der Ansprüche 1 bis 11, wobei die Zusammensetzung Z1 mittels Aufsprühen oder Rollen auf die Deckschicht aufgetragen wird.

13. Verfahren gemäß einem der Ansprüche 1 bis 12, wobei die gemäß Schritt C) aufgetragene Schicht eine Dicke im Bereich von 0,5 bis 30 cm aufweist.

14. Verfahren gemäß einem der Ansprüche 1 bis 13, wobei das Verfahren einen Schritt D) umfasst:
D) Aufbringen einer Deckschicht auf die gemäß Schritt C) aufgetragene Schicht.

15. Verfahren gemäß einem der Ansprüche 1 bis 14, wobei die Deckschicht eine Metallfolie ist.

16. Verfahren gemäß einem der Ansprüche 1 bis 15, wobei die Deckschicht eine Dicke im Bereich von 0,01 mm bis 5,0 mm aufweist.

17. Verbundelement, erhältlich oder erhalten nach einem Verfahren gemäß einem der Ansprüche 1 bis 16.

18. Verwendung einer Zusammensetzung Z1 enthaltend mindestens eine gegenüber Isocyanaten reaktive Verbindung als Haftvermittler in einem Verfahren zur Herstellung eines Verbundelements umfassend mindestens eine Deckschicht und mindestens eine Polyurethan- und/oder Polyisocyanuratschaumschicht,
wobei das Verfahren die Schritte A) bis C) umfasst:
A) Bereitstellen der Deckschicht;
B) Auftragen der Zusammensetzung Z1 enthaltend mindestens eine gegenüber Isocyanaten reaktive Verbindung auf die Deckschicht;
C) Auftragen einer Zusammensetzung Z2, die zur Herstellung des Polyurethan- und/oder Polyisocyanuratschaums geeignet ist, auf die gemäß Schritt B) aufgetragene Schicht,
wobei die Zusammensetzung Z1 weniger als 5 Gewichts-% bezogen auf die Masse der gegenüber Isocyanaten reaktiven Verbindung an Verbindungen enthält, die mit Isocyanat unter Bildung eines Gases reagieren.

19. Verwendung gemäß Anspruch 18, wobei die Zusammensetzung Z1 weniger als 0,2 Gewichts-% bezogen auf die Masse der gegenüber Isocyanaten reaktiven Verbindung an Verbindungen enthält, die mit Isocyanat unter Bildung eines Gases reagieren.

## Claims

1. A process for the production of a composite element, at least comprising the following steps:
A) provision of an outer layer;
B) application, to the outer layer, of a composition Z1 comprising at least one compound reactive toward isocyanates;
C) application, to the layer applied in step B), of a composition Z2 suitable for the production of a polyurethane foam and/or polyisocyanurate foam,
where the composition Z1 comprises, based on the weight of the compound reactive toward isocyanates, less than 5% by weight of compounds that react with isocyanate with formation of a gas.

2. The process according to claim 1, where the composition Z1 comprises, based on the weight of the compound reactive toward isocyanates, less than 0.2% by weight of compounds that react with isocyanate with formation of a gas.

3. The process according to claim 1 or 2, where the composition Z1 comprises, based on the weight of the isocyanate-reactive compound, less than 5% by weight of low-boiling-point components not reactive toward isocyanate.

4. The process according to any of claims 1 to 3, where the at least one compound reactive toward isocyanates is selected from the group consisting of compounds having OH functional groups, compounds having NH functional groups, and compounds having SH functional groups.

5. The process according to any of claims 1 to 4, where the at least one compound reactive toward isocyanates is selected from the group consisting of polyethers, polyesters, compounds bearing ester and ether groups, compounds bearing urethane and ester and/or ether groups and compounds bearing urethane groups.

6. The process according to any of claims 1 to 5, where the OH functionality of the compound reactive toward isocyanates is smaller than or equal to 3 and greater than or equal to 1.

7. The process according to any of claims 1 to 6, where the quantity of the composition Z1 applied in step B) to the outer layer is in the range from 1 to 1000 g/m².

8. The process according to any of claims 1 to 7, where the composition Z1 comprises one or more of the following components:
(i) flame retardant;
(ii) blowing agent;
(iii) catalysts for the formation of polyurethane or of polyisocyanurate.

9. The process according to any of claims 1 to 8, where the composition Z2 comprises at least one polyisocyanate and comprises at least one compound reactive toward isocyanates.

10. The process according to any of claims 1 to 9, where the composition Z2 comprises the following components:
a) at least one polyisocyanate;
b) at least one compound reactive toward isocyanates;
c) at least one blowing agent.

11. The process according to any of claims 1 to 10, where the composition Z2 comprises one or more of the following components:
d) flame retardant;
e) catalysts for the formation of polyurethane or of polyisocyanurate,
f) further auxiliaries or additives.

12. The process according to any of claims 1 to 11, where the composition Z1 is applied to the outer layer by means of spray-application or rolling.

13. The process according to any of claims 1 to 12, where the thickness of the layer applied in step C) is in the range from 0.5 to 30 cm.

14. The process according to any of claims 1 to 13, where the process comprises a step D):
D) application of an outer layer to the layer applied in step C).

15. The process according to any of claims 1 to 14, where the outer layer is a metal foil.

16. The process according to any of claims 1 to 15, where the thickness of the outer layer is in the range from 0.01 mm to 5.0 mm.

17. A composite element obtainable or obtained by a process according to any of claims 1 to 16.

18. The use of a composition Z1 comprising at least one compound reactive toward isocyanates as adhesion promoter in a process for the production of a composite element comprising at least one outer layer and at least one polyurethane foam layer and/or polyisocyanurate foam layer,
where the process comprises the steps A) to C) :
A) provision of the outer layer;
B) application, to the outer layer, of the composition Z1 comprising at least one compound reactive toward isocyanates;
C) application, to the layer applied in step B), of a composition Z2 which is suitable for the production of the polyurethane foam and/or polyisocyanurate foam,
where the composition Z1 comprises, based on the weight of the compound reactive toward isocyanates, less than 5% by weight of compounds that react with isocyanate with formation of a gas.

19. The use according to claim 18, where the composition Z1 comprises, based on the weight of the compound reactive toward isocyanates, less than 0.2% by weight of compounds that react with isocyanate with formation of a gas.

## Revendications

1. Procédé de fabrication d'un élément composite, comprenant au moins les étapes suivantes :
A) la préparation d'une couche de recouvrement ;
B) l'application d'une composition Z1 contenant au moins un composé réactif avec les isocyanates sur la couche de recouvrement ;
C) l'application d'une composition Z2, qui est appropriée pour la fabrication d'une mousse de polyuréthane et/ou de polyisocyanurate, sur la couche appliquée selon l'étape B),
la composition Z1 contenant moins de 5 % en poids, par rapport à la masse du composé réactif avec les isocyanates, de composés qui réagissent avec les isocyanates avec formation d'un gaz.

2. Procédé selon la revendication 1, dans lequel la composition Z1 contient moins de 0,2 % en poids, par rapport à la masse du composé réactif avec les isocyanates, de composés qui réagissent avec les isocyanates avec formation d'un gaz.

3. Procédé selon la revendication 1 ou 2, dans lequel moins de 5 % en poids, par rapport à la masse du composé réactif avec les isocyanates, de composants de point d'ébullition faible, non réactifs avec les isocyanates, sont ajoutés à la composition Z1.

4. Procédé selon l'une quelconque des revendications 1 à 3, dans lequel l'au moins un composé réactif avec les isocyanates est choisi dans le groupe constitué par les composés contenant des groupes à fonction OH, les composés contenant des groupes à fonction NH et les composés contenant des groupes à fonction SH.

5. Procédé selon l'une quelconque des revendications 1 à 4, dans lequel l'au moins un composé réactif avec les isocyanates est choisi dans le groupe constitué par les polyéthers, les polyesters, les composés qui portent des groupes ester et éther, les composés qui portent des groupes uréthane, ester et/ou éther, et les composés qui portent des groupes uréthane.

6. Procédé selon l'une quelconque des revendications 1 à 5, dans lequel la fonctionnalité OH du composé réactif avec les isocyanates est inférieure ou égale à 3 et supérieure ou égale à 1.

7. Procédé selon l'une quelconque des revendications 1 à 6, dans lequel la composition Z1 est appliquée sur la couche de recouvrement selon l'étape B) en une quantité dans la plage allant de 1 à 1 000 g/m².

8. Procédé selon l'une quelconque des revendications 1 à 7, dans lequel la composition Z1 contient un ou plusieurs des composants suivants :
(i) des agents ignifuges ;
(ii) des agents gonflants ;
(iii) des catalyseurs pour la formation de polyuréthanes ou de polyisocyanurates.

9. Procédé selon l'une quelconque des revendications 1 à 8, dans lequel la composition Z2 contient au moins un polyisocyanate et au moins un composé réactif avec les isocyanates.

10. Procédé selon l'une quelconque des revendications 1 à 9, dans lequel la composition Z2 contient les composants suivants :
a) au moins un polyisocyanate ;
b) au moins un composé réactif avec les isocyanates :
c) au moins un agent gonflant.

11. Procédé selon l'une quelconque des revendications 1 à 10, dans lequel la composition Z2 contient un ou plusieurs des composants suivants :
d) des agents ignifuges,
e) des catalyseurs pour la formation de polyuréthanes ou de polyisocyanurates,
f) des adjuvants ou additifs supplémentaires.

12. Procédé selon l'une quelconque des revendications 1 à 11, dans lequel la composition Z1 est appliquée par pulvérisation ou cylindrage sur la couche de recouvrement.

13. Procédé selon l'une quelconque des revendications 1 à 12, dans lequel la couche appliquée selon l'étape C) présente une épaisseur dans la plage allant de 0,5 à 30 cm.

14. Procédé selon l'une quelconque des revendications 1 à 13, dans lequel le procédé comprend une étape D) :
D) l'application d'une couche de recouvrement sur la couche appliquée selon l'étape C).

15. Procédé selon l'une quelconque des revendications 1 à 14, dans lequel la couche de recouvrement est une feuille métallique.

16. Procédé selon l'une quelconque des revendications 1 à 15, dans lequel la couche de recouvrement présente une épaisseur dans la plage allant de 0,01 mm à 5,0 mm.

17. Élément composite, pouvant être obtenu ou étant obtenu par un procédé selon l'une quelconque des revendications 1 à 16.

18. Utilisation d'une composition Z1 contenant au moins un composé réactif avec les isocyanates en tant que promoteur d'adhésion dans un procédé pour la fabrication d'un élément composite comprenant au moins une couche de recouvrement et au moins une couche de mousse de polyuréthane et/ou de polyisocyanurate,
le procédé comprenant les étapes A) à C) :
A) la préparation de la couche de recouvrement ;
B) l'application de la composition Z1 contenant au moins un composé réactif avec les isocyanates sur la couche de recouvrement ;
C) l'application d'une composition Z2, qui est appropriée pour la fabrication de la mousse de polyuréthane et/ou de polyisocyanurate, sur la couche appliquée selon l'étape B),
la composition Z1 contenant moins de 5 % en poids, par rapport à la masse du composé réactif avec les isocyanates, de composés qui réagissent avec les isocyanates avec formation d'un gaz.

19. Utilisation selon la revendication 18, dans laquelle la composition Z1 contient moins de 0,2 % en poids, par rapport à la masse du composé réactif avec les isocyanates, de composés qui réagissent avec les isocyanates avec formation d'un gaz.
